(19) Europäisches Patentamt
European Patent Office
Office européen des brevets

(11) Numéro de publication: **0 340 120 A1**

(12) **DEMANDE DE BREVET EUROPEEN**

(21) Numéro de dépôt: **89420124.3**

(22) Date de dépôt: **04.04.89**

(51) Int. Cl.4: **C 08 K 5/54**
C 08 L 83/04

(30) Priorité: **07.04.88 FR 8804849**

(43) Date de publication de la demande:
**02.11.89 Bulletin 89/44**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Perrin, Patrice**
**39, rue Boileau**
**F-69006 Lyon (FR)**

**Pierron, André**
**Chatillon d'Azergues**
**F-69380 Lozanne (FR)**

(74) Mandataire: **Seugnet, Jean Louis et al**
**RHONE-POULENC CHIMIE Service Brevets Chimie**
**Centre de Recherches des Carrières B.P. 62**
**F-69192 Saint-Fons Cédex (FR)**

(54) **Composition organopolysiloxane à fonction cétiminoxy durcissable en élastomère autoadhérent.**

(57) La présente invention concerne une composition organopolysiloxane dont l'agent de réticulation comporte un cétiminoxysilane, caractérisée en ce qu'elle contient une quantité efficace d'un agent d'ahdérence choisi parmi un mélange et le produit de réaction d'un composé organosilicié amino-fonctionnel porteur d'une fonction amine primaire et d'un composé organosilicié porteur d'un radical époxy-fonctionnel.

La composition selon l'invention qui comporte en outre une charge et un catalyseur de durcissement est utilisable pour réaliser des revêtements ou des joints et présente une adhérence fortement améliorée sur le verre, l'aluminium, le polychorure de vinyle et autres substrats recontrés dans l'industrie du bâtiment.

EP 0 340 120 A1

## Description

### COMPOSITION ORGANOPOLYSILOXANE A FONCTION CETIMINOXY DURCISSABLE EN ELASTOMERE AUTOADHERENT

La présente invention concerne une composition organopolysiloxane stable au stockage en l'absence d'humidité et durcissable en un élastomère autoadhérent en présence d'humidité comportant comme constituants essentiels un polymère α-ω-dihydroxydiorganopolysiloxane, un agent de réticulation cétiminoxysilane et un agent d'adhérence choisi parmi un mélange et le produit de réaction d'un composé organosilicié amino-fonctionnel porteur d'une fonction amine primaire et d'un composé organosilicié porteur d'un radical époxy-fonctionnel.

Les compositions mono-composantes à réticulant cétiminoxysilane comportant généralement en outre une charge minérale et un catalyseur de durcissement, sont bien connues depuis longtemps. Elles sont par exemple décrites dans les brevets français FR-A-1 314 649, FR-A-1 371 250, américains US-A-3 678 003 et US-A-3 986 999, dans le brevet britannique GB-A-1 468 467, dans le brevet belge BE-A-901 479 et dans le brevet européen EP-A-157 580.

Ces compositions sont notamment utilisées pour des applications de revêtement et de jointoiement et en particulier comme agent de scellage dans l'industrie du bâtiment pour réaliser des structures vitrées.

L'élastomère durci doit, dans cette application particulière, présenter un module d'élasticité relativement bas et surtout adhérer fortement au verre et au matériau constitutif de la structure dans laquelle le verre est monté, tel que le bois, l'aluminium, le béton, le PVC (polychlorure de vinyle), les caoutchoucs naturels et synthétiques, la pierre, la faïence et la brique.

Toutefois les élastomères issus des compositions à réticulant cétiminoxysilane présentent généralement une adhérence insuffisante vis-à-vis des matériaux rencontrés dans l'industrie du bâtiment et l'on a déjà proposé divers additifs incorporés dans la composition en vue de remédier à cette insuffisance.

Le brevet belge BE-A-901 479 propose ainsi d'utiliser des complexes du titane dont certains sont par ailleurs revendiqués comme catalyseurs de réticulation dans le brevet français FR-A-2 531 095.

Le brevet français FR-A-2 074 144 enseigne l'utilisation, dans une composition à fonction cétiminoxy comme agent d'adhérence, d'un silane amino-fonctionnel. Ces agents d'adhérence sont par ailleurs connus (dans la même application) pour des compositions dont l'agent de réticulation est un polyalcoxysilane (voir notamment le brevet européen EP-A-021 859). Ces agents d'adhérence sont présentés comme n'influençant pas la stabilité au stockage des matières premières durcissables susceptibles de donner des élastomères sans pour autant être moins efficaces.

Des exemples typiques de cette famille d'agents d'adhérence sont les suivants :

$(C_2H_5O)_3Si(CH_2)_3NH_2$ γ-aminopropyl-triéthoxysilane

$CH_3(C_2H_5O)_2Si(CH_2)_3NH_2$ γ-aminopropyl-méthyl-diéthoxysilane

$(CH_3)(CH_3O)_2Si(CH_2)_3NH(CH_2)_2NH_2$ β-aminoéthyl, γ-aminopropyl-méthyl-diméthoxysilane.

Il est par ailleurs connu par le brevet US-A-4 115 356 d'utiliser un trialcoxysilane porteur d'un radical époxy-fonctionnel comme agent d'adhérence pour des compositions élastomères silicone dont l'agent de réticulation est un polyacyloxysilane.

Le silane typique utilisé est le :

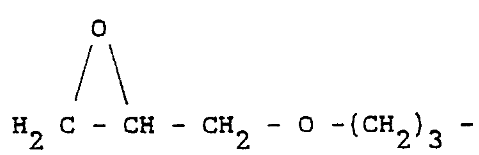 γ-glycidoxypropyltriméthoxysilane.

Il est également connu pour les compositions élastomère silicones à agent de réticulation polyalcoxysilane bi-composantes (EP-A-178 751) et mono-composantes (EP-A-221 644), d'utiliser un agent d'adhérence choisi parmi le produit de réaction ou le simple mélange d'un polyalcoxysilane amino-fonctionnel et d'un polyalcoxysilane époxy-fonctionnel. Les silanes utilisés sont en particulier ceux indiqués ci-dessus.

Dans la demande de brevet japonais KOKAI 79/90 348 on décrit l'utilisation, comme agent d'adhérence de compositions mono-composantes à réticulant cétiminoxysilane, du produit de réaction d'une amine organique primaire sur un polyalcoxysilane époxy-fonctionnel. Les polyalcoxysilanes amino-fonctionnels sont explicitement exclus de l'enseignement de cette demande de brevet car ils provoquent un jaunissement de la composition.

De l'étude de cet art antérieur, il apparaît que les polyalcoxysilanes amino-fonctionnels ont déjà été décrits comme agent d'adhérence à la fois pour les deux familles de compositions élastomères silicones à réticulant alcoxy et à réticulant cétiminoxy.

L'homme de métier pourrait donc être amené à penser que tous les agents d'adhérence décrits pour une famille pourraient être utilisés pour l'autre famille. Ce n'est pas le cas dans la réalité comme cela a été démontré dans la demande de brevet français 86/12 892 déposée le 11 septembre 1986 au nom de

RHONE-POULENC CHIMIE DE BASE.

En outre, comme le montre les exemples comparatifs de cette même demande, il apparaît que les agents d'adhérence de l'art antérieur présentent, dans les compositions à réticulant cétiminoxysilane, au moins l'un des inconvénients ci-dessous.

1. - la stabilité au stockage des compositions est affectée par la présence de l'agent d'adhérence,

2. - la réticulation des compositions en élastomère est trop lente, en particulier à température ambiante,

3. - l'agent d'adhérence ne procure pas à l'élastomère une adhérence suffisante,

4. - les propriétés physiques de l'élastomère sont médiocres ou nettement insuffisantes en particulier pour les applications de jointoiement,

5. - les élastomères sont colorés par l'agent d'adhérence.

La présente invention a précisément pour objet de proposer un agent d'adhérence à incorporer dans les compositions à réticulant cétiminoxysilane, qui ne présente pas les inconvénients des agents d'adhérence connus ou sous une forme atténuée.

Ce but et d'autres sont atteints par la présente invention qui concerne en effet une composition organopolysiloxane stable au stockage en l'absence d'humidité et durcissable en un élastomère en présence d'humidité, caractérisée en ce qu'elle comporte :

A. - 100 parties en poids d'au moins un polymère α-ω-dihydroxydiorganopolysiloxane de viscosité 700 à 1 000 000 mPa.s à 25 °C, formé d'une succession de motifs diorganosiloxy de formule $T_2SiO$, dans laquelle les radicaux T, identiques ou différents, représentent des radicaux hydrocarbonés ayant de 1 à 10 atomes de carbone, au moins 50 % en nombre des radicaux T étant des groupes méthyle,

B. - 0,5 à 20 parties en poids d'au moins un agent de réticulation comportant au moins un cétiminoxysilane,

C. - 0,1 à 10 parties en poids d'un agent d'adhérence choisi parmi le mélange et le produit de réaction :

* d'un composé organosilicié $C_1$ porteur d'au moins un radical amino-fonctionnel ayant une fonction amine primaire, et

* d'un composé organosilicié $C_2$ porteur d'au moins un radical époxy-fonctionnel ayant de 4 à 20 atomes de carbone suivant un rapport de 0,5 à 4 équivalents de fonction amine primaire de $C_1$ par équivalent de fonction époxy de $C_2$,

D. - 5 à 250 parties en poids de charges minérales,

E. - 0,0004 à 3 parties en poids d'un catalyseur de durcissement qui est un composé d'un métal.

Le composé organosilicié $C_1$ porteur d'au moins un radical amino-fonctionnel peuvent être choisis parmi : $C_1A$ les silanes de formule :

```
      Xa
      |
RHNR' Si(OR")3-a
```

dans laquelle :

- R représente un atome d'hydrogène, un radical alkyle ayant de 1 à 6 atomes de carbone inclusivement ou un radical hydrocarboné aliphatique relié à l'atome d'azote par une liaison carbone et contenant au moins un groupe amine primaire,
- R′ représente un radical hydrocarboné bi-valent ayant de 1 à 6 atomes de carbone présentant éventuellement une fonction éther,
- R″ représente un groupe alkyle ou alcoxyalkyle ayant moins de 8 atomes de carbone et a est 0 ou 1,
- X est choisi parmi les radicaux vinyle, phényle et alkyle en $C_1$-$C_6$.

Plus précisément ces silanes $C_1A$ peuvent répondre aux formules ci-après :

$(CH_3O)_3Si(CH_2)_3NH(CH_2)_2NH_2$ ; $(CH_3OCH_2CH_2O)_3Si(CH_2)_2NH_2$ ;
$(C_2H_5O)_3Si(CH_2)_3NH_2$ ; $(CH_3OCH_2CH_2O)_3Si(CH_2)_3NH_2$ ;
$(C_2H_5O)_3Si(CH_2)_3O(CH_2)_3NH_2$ ; $(C_2H_5O)_2C_6H_5Si(CH_2)_3O(CH_2)_3NH_2$ ;
$(C_2H_5O)_3SiCH_2O(CH_2)_2NH_2$ ; $(C_2H_5O)_3Si(CH_2)_3O(CH_2)_2NH_2$ ;
$(C_2H_5O)_2CH_3Si(CH_2)_3NH_2$.

$C_1B$ : les aminoorganopolysiloxanes provenant de la réaction des silanes $C_1A$ sur des organopolysiloxanes hydroxylés (i) à raison de 0,4 à 1,2 équivalent-gramme de fonction $NH_2$ par équivalent-gramme de fonction hydroxyle.

Ces polymères hydroxylés (i) comprennent notamment :

- les huiles de formule $[HO\ Si(CH_3)_2O]_yH$ dans laquelle le symbole y représente un nombre quelconque allant de 2 à 22,
- les résines de rapport $CH_3/Si$ supérieur ou égal à 1,6, renfermant au moins 2 % en poids de groupes hydroxyle, constitués de motifs choisis principalement parmi ceux de formules $(CH_3)_3SiO_{0,5}$, $(CH_3)_2SiO$ et $CH_3SiO_{0,5}$.
- les résines méthylpolysiloxane MQ constituées de motifs $(CH_3)_3SiO_{0,5}$ (M) et $SiO_2$ (Q) avec un rapport molaire M/Q compris entre 0,4 et 1,2 et une teneur en poids en OH de 2 à 6 %.

Les réactifs (i) et ($C_1A$ sont chauffés, de préférence en milieu solvant, à une température et pendant une période de temps suffisante pour éliminer la quantité attendue d'alcanol engendré par la réaction :

$$-Si(OR'')_3 + HOSi\lessdot \rightarrow Si(OR'')_2OSi\lessdot + R''OH$$

Il est préférable de couler l'huile hydroxylée dans un excès de silane aminé.

Il en résulte la formation de copolymères possèdant à la fois outre les groupes méthyle, des groupes alcoxy tels que méthoxyle, éthoxyle ou méthoxyéthoxyle et des groupes aminoorganiques. De tels copolymères figurent par exemple dans le brevet français FR-A-1 381 590 et FR-A-1 385 693.

$C_1C$ : les diorganopolysiloxanes présentant dans la chaîne des motifs $CH_3(R'NHR)SiO$, R′ et R ayant la signification donnée ci-dessus.

Ces polymères sont par exemple décrits dans les brevets GB-A-1 306 680 et US-A-4 412 035.

Le composé organosilicié $C_2$ porteur d'un radical époxy-fonctionnel ayant de 4 à 20 atomes de carbone peut être choisi parmi :

- $C_2A$ : les silanes de formule :

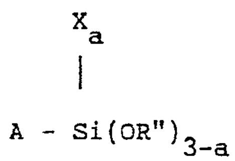

dans laquelle :

- X, R″ et a ont la même signification que ci-dessus pour $C_1A$.

A est un radical organique hydrocarboné porteur d'un groupe époxy ayant de 4 à 20 atomes de carbone.

Des exemples spécifiques de ces silanes sont les suivants :

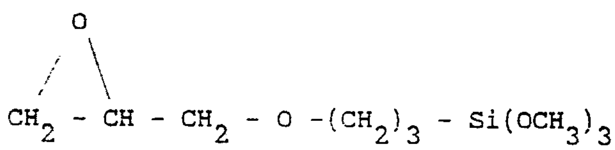

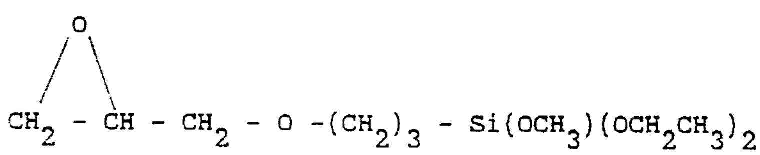

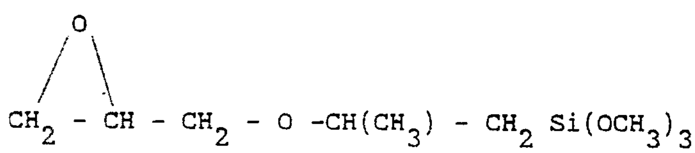

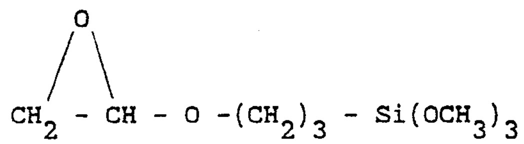

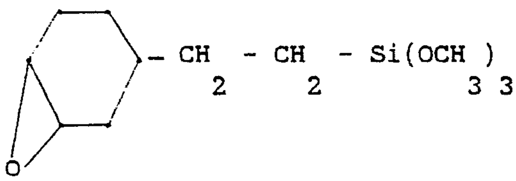

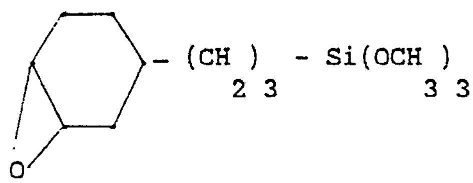

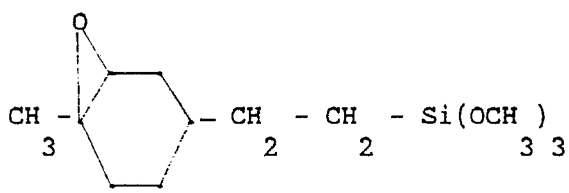

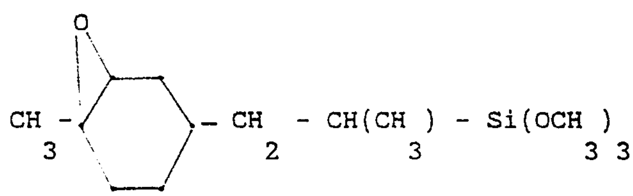

$C_2B$ : les diorganopolysiloxanes bloqués par un radical époxy-fonctionnel provenant de la réaction des silanes $C_2A$ sur les mêmes organopolysiloxanes hydroxylés (i) linéaires ou ramifiés utilisés pour synthétiser les polymères $C_1B$ ci-dessus.

Des polymères $C_2B$ sont par exemple décrits dans les brevets US-A-4 033 924, US-A-4 082 726, US-A-4 412 035 et EP-A-164 879.

Sont plus spécialement préférés le produit de réaction des résines MQ hydroxylées définies plus haut pour fabriquer $C_1B$ sur les silanes $C_2A$ comme par exemple décrit dans le brevet européen EP-A-226 934.

$C_2C$ : les diorganopolysiloxanes porteurs dans la chaîne de motifs $ACH_3SiO$, A ayant la signification donnée ci-dessus.

Ces polymères sont en particulier décrits dans les brevets US-A-3 455 877, US-A-4 252 933 et FR-A-2 012 012.

De façon à améliorer la stabilité au stockage de la composition, il est recommandé d'avoir un excès de $C_1$ par rapport à $C_2$ calculé en équivalent gramme de fonction amine primaire de $C_1$ par rapport à la teneur en équivalent-gramme de fonction époxy de $C_2$.

Ainsi on utilise de préférence des quantités de $C_1$ et $C_2$ suivant un rapport de 1,05 à 3 inclus.

Quand on les mélange, les composés $C_1$ et $C_2$, en particulier les silanes $C_1A$ et $C_2B$ peuvent réagir l'un sur l'autre pour former un produit d'addition.

On peut ainsi accélérer la réaction par mélange préalable des deux silanes à une température comprise entre 20 et 80 °C.

Les produits d'addition préférés répondent aux formules :

$$(C_2H_5O)_3Si(CH_2)_3 - NH - CH_2 - \underset{OH}{CH} - CH_2 - O(CH_2)_3Si(OCH_3)_3$$

$$(CH_3O)_3Si(CH_2)_3 - NH - CH_2 - \underset{OH}{CH}\ H - CH_2 - O(CH_2)_3Si(OCH_3)_3$$

$(CH_3O)_3Si(CH_2)_3 - NH - (CH_2)_2 - NH - CH_2 - \underset{\underset{OH}{|}}{CH} - CH_2 - O(CH_2)_3Si(OCH_3)_3$

Les polymères α-ω-di(hydroxy)diorganopolysiloxane A de viscosité 700 à 1 000 000 mPa.s à 25 °C, de préférence 1 000 à 700 000 mPa.s à 25 °C, sont des polymères linéaires, constitués essentiellement de motifs diorganosiloxy de formule précitée $T_2SiO$, et bloqués à chaque extrémité de leur chaîne par un groupe hydroxyle ; toutefois, la présence de motifs mono-organosiloxy de formule $TSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles T, englobent :
- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 4 atomes de carbone tels que les radicaux vinyle, allyle, butène-2 yle,
- les radicaux aryles et halogénoaryles mono-nucléaires ayant de 6 à 10 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux β-cyanoéthyle et γ-cyanopropyle, les radicaux méthyle, phényle, vinyle et trifluoro-3,3,3 propyle sont les radicaux préférés.

A titre d'exemples concrets de motifs représentés par la formule $T_2SiO$ on peut citer ceux de formules :
- $(CH_3)_2SiO$,
- $CH_3(CH_2 = CH)SiO$
- $CH_3(C_6H_5)SiO$
- $(C_6H_5)_2SiO$,
- $CF_3CH_2CH_2(CH_3)SiO$,
- $NC - CH_2CH_2(CH_3)SiO$,
- $NC - CH(CH_3)CH_2(CH_2 = CH)SiO$,
- $NC - CH_2CH_2CH_2(C_6H_5)SiO$.

Il doit être compris que l'on peut utiliser comme polymère A un mélange constitué de polymères α-ω-di(hydroxy)diorganopolysiloxane qui diffèrent entre eux par le poids moléculaire et/ou la nature des groupements liés aux atomes de silicium.

Ces polymères α-ω-di(hydroxy)diorganoplysiloxane A sont commercialisés ; en outre, ils peuvent être aisément fabriqués selon des techniques maintenant bien connues. Il est souhaitable d'utiliser ces polymères après les avoir dévolatilisés par exemple par le procédé de dévolatilisation décrit dans le brevet américain US-A-4 356 116.

Les agents réticulants B sont employés à raison de 0,5 à 20 parties, de préférence 1 à 18 parties, pour 100 parties de polymères α-ω-di(hydroxy)diorganopolysiloxanes A. Ce sont des composés organosiliciques portant au moins deux radicaux hydrolysables cétiminoxy par molécule, liés aux atomes de silicium.

De préférence, l'agent réticulant B répond à la formule générale :

$Y^1_fSiZ^1_{4-f}$

dans laquelle :
- le symbole $Y^1$ représente un radical hydrocarboné en $C_1$-$C_{10}$, substitué ou non par des atomes d'halogène ou des groupes cyano,
- les symboles $Z^1$, identiques ou différents, représentent des radicaux hydrolysables choisis parmi ceux de formules :

$Z^2_2C = NO$ , 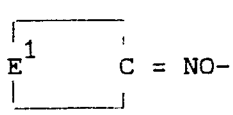 ,

dans lesquelles les symboles $Z^2$, identiques ou différents, représentent des radicaux hydrocarbonés en $C_1$-$C_8$, le symbole $E^1$ représente un radical alkylène en $C_4$-$C_8$,
- le symbole f représente zéro ou un.

Le symbole $Y^1$ peut avoir la même signification que le symbole T des motifs précédents de formule $T_2SiO$ ; ainsi l'illustration donnée pour T convient également pour $Y^1$.

Les symboles $Z^2$ représentent des radicaux hydrocarbonés en $C_1$-$C_8$ englobent notamment :
- les radicaux alkyles en $C_1$-$C_8$ tels que les radicaux méthyle, éthyle, propyle, isopropyle, butyle, isobutyle, éthyl-2 hexyle, octyle,
- les radicaux cycloalkyles en $C_5$-$C_8$ tels que les radicaux cyclopentyle, cyclohexyle, méthylcyclohexayle,
- les radicaux aryles mono-nucléaires en $C_6$-$C_8$ tels que les radicaux phényle, tolyle, xylyle.

Le symbole $E^1$ représente un radical alkylène en $C_4$-$C_8$ qui peut répondre aux formules : $-(CH_2)_4-$, $-(CH_2)_5-$,

$-(CH_2)_6-$, $-(CH_2)_7-$, $-CH_2-CH_2(C_2H_5)(CH_2)_3-$, $-CH_2-CH_2-CH(CH_3)CH_2CH_2$.

Comme exemples de silanes B on peut citer les silanes de formules :

- $CH_3Si\ [ON = C(CH_3)_2]_3$ , $CH_3Si\ [ON = C(CH_3)C_2H_5]_3$ ,
- $CH_2 = CHSi\ [ON = C(CH_3)C_2H_5]_3$ , $C_6H_5Si\ ON\ [= C(CH_3)_2]_3$ ,
- $CH_3Si\ [ON = C\ (C_2H_5)\ (CH_2)_3CH_3]_2$ ,
- $(CH_3)_2C = NOSi\ [ON = C(CH_3)C_2H_5]_3$ ,

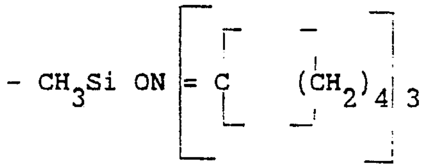

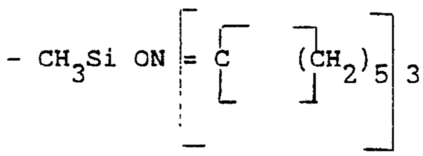

Les charges minérales D sont utilisées à raison de 5 à 250 parties, de préférence 20 à 200 parties, pour 100 parties des polymères α-ω-di(hydroxy)diorganopolysiloxanes A.

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium traité ou non traité, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges D peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganonocyclopolysiloxanes (brevets français FR-A-1 126 884, FR-A-1 136 885, FR-A-1 236 505 ; brevet anglais GB-A-1 024 234). Les charges traitées renferment, dans la plupart des cas, de 3 à 30 % de leur poids de composés organosiliciques.

Les charges D peuvent être constituées d'un mélange de plusieurs types de charges de granulométrie différente ; ainsi par exemple, elles peuvent être constituées de 5 à 95 % de silices finement divisées de surface spécifique BET supérieure à 40 $m^2/g$ et de 95 à 5 % de silices plus grossièrement divisées de surface spécifique inférieure à 30 $m^2/g$ ou de carbonate de calcium traité ou non traité.

Les compositions contiennent un catalyseur E qui est un composé d'un métal choisi généralement parmi l'étain, le fer, le titane et le zirconium.

On utilise généralement de 0,0004 partie à 3 parties de E pour 100 parties de A.

En ce qui concerne l'étain, les catalyseurs les plus utilisés sont les dicarboxylates de dialkylétain en particulier le dilaurate ou le diacétate de dibutylétain (ouvrage de NOLL "CHEMISTRY AND TECHNOLOGY OF SILICONES, page 337, Edition 1968), et les diversates de dibutylétain (brevet français FR-A-2 066 159).

On peut également utiliser les produits de réactions de dicarboxylates de dialkylétain sur les polyalcoxysilanes ou les polysilicates d'alkyle (brevets américains US-A-3 186 963 et US-A-3 862 919 et le brevet belge BE-A-842 305).

On peut également utiliser les chelates d'étain comme décrits dans les brevets européens EP-A-147 323 et EP-A-235 049).

En ce qui concerne le titane et le zirconium on peut utiliser les catalyseurs, objets du brevet européen EP-A-102 268.

Tous les brevets ci-dessus mentionnant des catalyseurs de durcissement utilisables sont cités comme références.

Outre les constituants A à E décrits ci-dessus, les compositions selon l'invention peuvent contenir d'autres ingrédients.

Parmi ces ingrédients figurent des composés organosiliciques, principalement des polymères qui ont la faculté d'agir sur les caractéristiques physiques des compositions conformes à l'invention et/ou sur les propriétés mécaniques des élastomères silicones issus de ces compositions, utilisés à raison de 1 à 150 parties pour 100 parties de A.

Ces composés sont bien connus, ils comprennent par exemple :

- des polymères α-ω-bis(triorganosiloxy)diorganopolysiloxanes de viscosité d'au moins 10 mPa.s à 25 °C dont les radicaux organiques liés aux atomes de silicium sont choisis parmi les radicaux méthyle, vinyle, phényle ;

de préférence sont utilisées des huiles α-ω-bis(triméthylsiloxy)diméthylpolysiloxanes de viscosité 10 mPa.s à 25 °C à 1 500 mPa.s à 25 °C,
- des polymères méthylpolysiloxanes ramifiés, liquides, renfermant de 0,1 à 8 % de groupes hydroxyles liés aux atomes de silicium, formés de motifs $(CH_3)_3SiO_{0,5}$, $(CH_3)_2SiO$, $CH_3SiO_{1,5}$ répartis de manière à conduire à un rapport $(CH_3)_3SiO_{0,5}/(CH_3)_2SiO$ de 0,01 à 0,15 et à un rapport $CH_3SiO_{1,5}/(CH_3)_3SiO$ de 0,1 à 1,5,
- des huiles α-ω-di(hydroxy)diméthylpolysiloxanes de viscosité 10 à 300 mPa.s à 25 °C et des huiles α-ω-di(hydroxy)méthylphénylpolysiloxanes de viscosité 200 à 1 000 mPa.s à 25 °C,
- du diphénylsilanediol, du tétraméthyl-1,1,3,3 disiloxanediol.

Les polymères α-ω-bis(triorganosiloxy)diorganopolysiloxanes précédents peuvent être remplacés totalement ou partiellement par des composés organiques inertes vis-à-vis des divers constituants des bases et miscibles au moins avec les polymères diorganopolysiloxanes A.

Comme exemples de plastifiants organiques on peut en particulier citer des coupes pétrolières de point d'ébullition supérieur à 200 °C, formées d'un mélange d'hydrocarbures aliphatiques et/ou aromatiques, des polybutylènes, de préférence de faible poids moléculaire, comme décrits dans les brevets français FR-A-2 254 231, FR-A-2 293 831 et FR-A-2 405 985, les produits d'alkylation du benzène en particulier, les polyalkylbenzènes obtenus par alkylation du benzène par des oléfines à longue chaîne linéaire ou ramifiée, en particulier des oléfines à 12 atomes de carbone issues de la polymérisation du propylène, comme décrits par exemple dans le brevet français FR-A-2 446 849.

On peut également utiliser les polymères mixtes organiques polydiorganosiloxane tels que les copolymères à blocs polyoxyalkylènes polyorganosiloxanes, des esters phosphoriques (FR-A-2 372 203), du phosphate de trioctyle (FR-A-2 415 132), des esters dialcooliques d'acides dicarboxyliques (US-A-2 938 007) et des cycloalkylbenzènes (FR-A-2 392 476).

Les produits d'alkylation du benzène de poids moléculaire supérieur à 200, en particulier les alkylbenzènes et les polyalkylbenzènes sont les plastifiants organiques préférés.

Des ingrédients non organosiliciques peuvent aussi être introduits, par exemple, des stabilisants thermiques. Ces composés améliorent la résistance à la chaleur des élastomères silicones. Ils peuvent être choisis parmi les sels d'acides carboxyliques, oxydes et hydroxydes de terres rares, et plus spécialement les oxydes et hydroxydes cériques ainsi que parmi le bioxyde de titane de combustion et les divers oxydes de fer. On emploie avantageusement de 0,1 à 15 parties, de préférence de 0,15 à 12 parties de stabilisants thermiques pour 100 parties des diorganopolysiloxanes A.

Pour fabriquer les compositions conformes à l'invention, il est nécessaire dans le cas de compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités.

Tous ces ingrédients peuvent être chargés dans l'appareillage selon un ordre quelconque d'introduction. Ainsi il est possible de mélanger tout d'abord les polymères diorganopolysiloxanes A, l'agent d'adhérence $C_1$ et $C_2$ ou son produit de réaction et les charges D et d'ajouter ensuite à l'empâtage obtenu les réticulants B et le catalyseur E.

Il est également possible de mélanger les polymères A et les réticulants B et d'ajouter ultérieurement, les charges D, l'agent d'adhérence C et le catalyseur E. Au cours de ces opérations, les mélanges peuvent être chauffés à une température comprise dans l'intervalle 50-180 °C sous la pression atmosphérique ou sous une pression réduite afin de favoriser le départ de matières volatiles telles que de l'eau, des polymères de bas poids moléculaire.

Les compositions peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les compositions selon l'invention peuvent être éventuellement utilisées après dilution dans des composés organiques liquides, les diluants sont de préférence des produits usuels commercialisés choisis parmi :
- les hydrocarbures aliphatiques, cycloaliphatiques, aromatiques, halogénés ou non, tels que le n-hepatne, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzène,
- les cétones aliphatiques et cycloaliphatiques tels que la méthyléthylcétone, la méthylisobutylcétone, la cyclohexanone, l'isophorone,
- les esters tels que l'acétate d'éthyle, l'acétate de butyle, l'acétate d'éthylglycol.

La quantité de diluant demeure en général peu importante, elle est en général inférieure à 50 % en poids par rapport au poids total de la composition.

Les dilutions précitées de ces compositions dans des diluants organiques sont plus spécialement utilisables pour l'imprégnation en couches minces d'articles tissés ou non-tissés, l'enduction de feuilles en métal ou en matière plastique ou cellulosique ; toutefois elles peuvent être projetées, par exemple par pulvérisation à l'aide d'un pistolet à peintures, sur n'importe quels substrats, pour lesquels il est nécessaire d'obtenir un revêtement d'épaisseur de l'ordre de 5 à 300 μm. Après la projection des dilutions, les diluants s'évaporent et les compositions libérées durcissent en un film caoutchouteux parfaitement uniforme.

Le temps de durcissement se situe habituellement entre 5 minutes et plusieurs heures ne dépassant pas 10

heures ; cette durée dépend des facteurs déjà cités à propos de la durée de durcissement des compositions déposées en couches plus épaisses et également de la rapidité avec laquelle les diluants s'évaporent. Cette technique de dépôt par pulvérisation est très pratique pour enduire d'un film mince de très grandes surfaces et plus spécialement les coques de navires et les filets pour l'élevage des animaux marins. Le dépôt d'un film silicone antiadhérent sur les surfaces des bateaux en contact avec l'eau de mer évite l'encrassement de ces surfaces dû à la fixation et au développement d'organismes marins tels que les algues, bernacles, huitres, ascidies ; cette application figure par exemple dans le brevet américain US-A-3 702 778.

Par ailleurs, ce film d'élastomère peut servir comme revêtement antiadhérent inerte, non toxique, de divers substrats en contact avec des produits alimentaires tels que (1) des papiers d'emballage pour confiserie, ou viandes congelées, (2) des bacs métalliques utilisables pour la préparation de glaces et sorbets et (3) des filets métalliques dans lesquels on dépose et moule la pâte à pain et que l'on introduit avec leur contenu dans les fours pour la cuisson du pain. Il peut être employé également, comme revêtement antiadhérent et non toxique de matériaux en contact avec le corps humain tels que compresses, pansements spéciaux pour brûlures.

Dans ce qui suit ou ce qui précède, sauf mentions contraires, les parties et pourcentages sont en poids.

- EXEMPLES 1 A 6 ET EXEMPLE COMPARATIF 7:

a) - différentes matières premières choisies :

- l'huile A à extrémités silanol est choisie parmi :

$A_1$ : l'huile α-ω-dihydroxypolydiméthylsiloxane de viscosité 70 000ma.s à 25 °C,

$A_2$ : identique à $A_1$ mais de viscosité 20 000 mPa.s à 25 °C,

$A_3$ : identique à $A_1$ mais de viscosité 3 500 mPa.s à 25 °C.

- le plastifiant P est choisi parmi :

$P_1$ : huile polydiméthylsiloxane bloquée triméthylsiloxy de viscosité 1 000 mPa.s à 25 °C,

$P_2$ : un polyalkylbenzène de viscosité 100 mPa.s à 25 °C, commercialisé par la Société MONSANTO sous la dénomination commerciale SANTOGEN®,

- le silane à fonction cétiminoxy B est choisi parmi :

$B_1$ : vinyltris(méthyléthylcetoxime)silane :

$(CH_2 = CH)\ Si\ ON = C(CH_3)C_2H_5\ _3$

$B_2$ : méthyltris(méthyléthylcétoxime)silane :

$CH_3Si\ ON = C(CH_3)C_2H_5\ _3$

- l'agent d'adhérence C est choisi parmi :

$C_1$ : le produit d'addition de formule :

$(C_2H_5O)_3Si(CH_2)_3\text{-NH-}CH_2\text{-}\underset{|\atop OH}{CH}\text{-}CH_2\text{-O-}(CH_2)_3\text{-Si}(OCH_3)_3$

$C_2$ : le produit d'addition de formule :

$(CH_3O)_3\text{-Si-}(CH_2)_3\text{-NH-}(CH_2)_2\text{-NH-}CH_2\text{-}\underset{|\atop OH}{CH}\text{-}CH_2\text{-O-}(CH_2)_3\text{-Si}(OCH_3)_3$

$C_3$ : le produit d'addition de formule :

$(CH_3O)_3Si(CH_2)_3 - NH - CH_2 - \underset{|\atop OH}{CH} - CH_2 - O - (CH_2)_3Si(OCH_3)_3$

- la charge D est choisie parmi :

$D_1$ : une silice de combustion non traitée de surface spécifique BET 150 $m^2/g$,

$D_2$ : du carbonate de calcium de granulométrie 5 µm traité par de l'acide stéarique,

$D_3$ : du quartz broyé,

- le catalyseur E est choisi parmi :

$E_1$ : le bis(acétylacétonate)dibutylétain,

$E_2$ : le diacétate de dibutylétain.

Les diverses matières premières et leur teneur en parties en poids des compositions sont rassemblées dans le tableau 1 ci-après.

b) - mode opératoire de préparation des compositions :

dans un mélangeur à agitation tripale, on homogénéise dans des conditions sensiblement anhydres à 80 °C sous balayage d'azote l'huile A et le plastifiant P.

Le mélange est soumis à une très forte agitation (450 tours/mn) durant 5 minutes et on introduit le silane B.

On abaisse ensuite l'agitation à 250 tours/mn et on ajoute dans l'ordre la charge D et le catalyseur E puis l'agent d'adhérence C.

Les compositions sont dévolatilisées trois minutes sous 1,33 KPa, refroidies à 20 °C et conservées dans des tubes en aluminium à l'abri de l'humidité de l'air.

c) - mesure des propriétés mécaniques :

Pour déterminer la faculté de cette composition de durcir rapidement à l'air ambiant en un élastomère, on l'étale à l'aide d'une râcle en une couche de 2 mm d'épaisseur sur une feuille en polyéthylène préalablement traitée par un agent tensioactif anionique commercial ; cet agent est constitué du sel de sodium d'un sulfate d'alcoyle dont le groupe alcoyle est ramifié et possède au moins 12 atomes de

carbone.
On note la période de temps au bout de laquelle la surface de la couche déposée est non collante. Cette mesure est effectuée avec une baguette en bois que l'on met en contact par l'une de ses deux extrémités, avec la surface de la couche déposée ; on examine si une adhérence significative existe entre la baguette et la couche. Cette mesure sera appelée temps non collant (t en minute) indiquée dans le tableau 1 ci-après.
Sur le film vieux de 7 jours, on mesure :
- la dureté SHORE A (DSA) selon la norme NF-T-51 109.
- la résistance à la rupture (R/R) en MPa selon la norme NF-T-46 002,
- l'allongement à la rupture (A/R) en % selon la norme NF-T-46 002,
- le module (M.Y) en MPa pour un allongement de 100 %.
Les résultats obtenus sont rassemblés dans le tableau 2 ci-après.
d) - appréciation de l'adhérence :
les supports testés sont l'aluminium anodisé (AA), le PVC rigide (PVC), et l'acier inoxydable (Acier).
On extrude sur une plaque (50 x 75 mm) de support, deux cordons de composition distants de 20 à 30 mm, chaque cordon ayant une longueur de 75 mm et un diamètre de 8 à 10 mm.
On laisse réticuler les deux cordons 7 jours à 20 °C.
On procède à l'essai de décollement à la main.
On apprécie alors l'adhérence par une note allant de 0 (décollement ou rupture adhésive) à 100 (pas de décollement ou rupture cohésive).
Les résultats sont notés I dans le tableau 2 ci-après.
Sur une autre plaque et après 7 jours de réticulation, on immerge l'éprouvette dans de l'eau distillée pendant 4 jours à 20 °C.
On sort alors l'éprouvette ; on la sèche et on l'abandonne à l'air pendant 24 heures.
On fait alors les tests de décollement comme indiqués ci-dessus. Les résultats sont notés E dans le tableau 2 ci-après.

TABLEAU 1

| EXEMPLE | 1 | 2 | 3 | 4 | 5 | 6 | 7* |
|---|---|---|---|---|---|---|---|
| A1 | 60 | 100 | 0 | 0 | 0 | 0 | 0 |
| A2 | 0 | 0 | 100 | 100 | 100 | 100 | 100 |
| A3 | 40 | 0 | 0 | 0 | 0 | 0 | 0 |
| P1 | 26 | 31 | 40 | 40 | 40 | 40 | 40 |
| P2 | 0 | 31 | 0 | 0 | 0 | 0 | 0 |
| B1 | 4 | 3 | 5 | 5 | 5 | 5 | 5 |
| B2 | 4 | 6 | 5 | 5 | 5 | 5 | 5 |
| C1 | 2 | 2 | 2 | 0 | 2 | 0 | 0 |
| C2 | 0 | 0 | 0 | 2 | 0 | 0 | 0 |
| C3 | 0 | 0 | 0 | 0 | 0 | 0 | 0 |
| D1 | 13 | 13,5 | 15 | 15 | 15 | 15 | 15 |
| D2 | 0 | 150 | 0 | 0 | 0 | 0 | 0 |
| D3 | 0 | 0 | 60 | 60 | 60 | 60 | 60 |
| E1 | 0,11 | 0 | 0,06 | 0,06 | 0 | 0 | 0,06 |
| E2 | 0 | 0,033 | 0 | 0 | 0,1 | 0,1 | 0 |
| t(mn) | 12 | 25 | 16 | 23 | 8 | 8 | 28 |

* : la composition de l'exemple comparatif 7 comporte en outre comme agent d'adhérence, deux parties de γ-glycidoxypropytriméthoxysilane.

TABLEAU 2

| EXEMPLE | | 1 | 2 | 3 | 4 | 5 | 6 | 7 |
|---|---|---|---|---|---|---|---|---|
| DSA | | 28 | 22 | 38 | 28 | 32 | 32 | 31 |
| MY | | 0,73 | 0,44 | 1,14 | 0,92 | 0,89 | 0,84 | 0,95 |
| R/R | | 1,54 | 1,17 | 3,0 | 2,75 | 2,76 | 2,66 | 3,3 |
| A/R | | 260 | 480 | 310 | 300 | 350 | 345 | 330 |
| SUPPORT | TEST | | | | | | | |
| PVC | I | 100 | 100 | 100 | | 100 | 100 | 0 |
| | E | 100 | 100 | 100 | | 100 | 100 | 0 |
| ACIER | I | | 100 | | 100 | | | |
| | E | | 100 | | 100 | | | |
| ALUMINIUM ANODISE | I | 100 | 100 | 100 | 100 | 100 | 100 | 100 |
| | E | 100 | 100 | 100 | 100 | 100 | 100 | 100 |

- EXEMPLES 8 ET 9 ET EXEMPLE COMPARATIF 10 :

Cet exemple concerne un test d'adhérence sur divers supports en matière plastique de synthèse que l'on trouve dans l'application collage d'optiques de phares d'automobiles.

A partir des compositions des exemples 4, 5 et 7 ci-dessus, on extrude sur une plaque (50 x 75 mm) de support, deux cordons distants de 20 à 30 mm, chaque cordon ayant une longueur de 75 mm et un diamètre de 8 à 10 mm.

On laisse réticuler les deux cordons 7 jours à 20 °C puis on émerge l'éprouvette ainsi réalisée pendant 3 jours dans de l'eau distillée maintenue à 60 °C.

On sort l'éprouvette de l'eau, on la sèche et on procède immédiatement à l'essai de décollement à la main et on apprécie alors l'adhérence par une note allant de 0 (décollement ou rupture adhésive) à 100 (pas de décollement ou rupture cohésive).

Les résultats sont rassemblés dans le tableau 3 ci-après.

Les exemples 8, 9 et 10 sont mis en oeuvre respectivement avec des compositions identiques à celles des exemples 4, 5 et 7.

TABLEAU 3

| EXEMPLE SUPPORT | 8 | 9 | 10 |
|---|---|---|---|
| POLYAMIDE | 100 | 100 | 0 |
| PVC | 100 | 100 | 0 |
| ABS | 100 | 100 | 0 |
| POLYCARBONATE | 100 | 100 | 0 |
| PLEXIGLASS® | 100 | 100 | 0 |

Des tableaux 2 et 3 il ressort que seul les agents d'adhérence selon l'invention permettent d'obtenir une adhérence correcte sur tous supports y compris sur matières plastiques synthétiques diverses.

**Revendications**

1. - Composition organopolysiloxane stable au stockage en l'absence d'humidité et durcissable en un élastomère en présence d'humidité, caractérisée en ce qu'elle comporte :

A. - 100 parties en poids d'au moins un polymère α-ω-dihydroxydiorganopolysiloxane de viscosité 700 à 1 000 000 mPa.s à 25 °C, formé d'une succession de motifs diorganosiloxy de formule

$T_2SiO$, dans laquelle les radicaux T, identiques ou différents, représentent des radicaux hydrocarbonés ayant de 1 à 10 atomes de carbone, au moins 50 % en nombre des radicaux T étant des groupes méthyle,

B. - 0,5 à 20 parties en poids d'au moins un agent de réticulation comportant au moins un cétiminoxysilane,

C. - 0,1 à 10 parties en poids d'un agent d'adhérence choisi parmi le mélange et le produit de réaction :

* d'un composé organosilicié $C_1$ porteur d'au moins un radical amino-fonctionnel ayant une fonction amine primaire, et

* d'un composé organosilicié $C_2$ porteur d'au moins un radical époxy-fonctionnel ayant de 4 à 20 atomes de carbone suivant un rapport de 0,5 à 4 équivalent-gramme de fonction amine primaire de $C_1$ par équivalent de fonction époxy de $C_2$,

D. - 5 à 250 parties en poids de charges minérales,

E. - 0,0004 à 3 parties en poids d'un catalyseur de durcissement qui est un composé d'un métal.

2. - Composition selon la revendication 1, caractérisée en ce que le composé $C_1$ est choisi parmi :

$C_1A$ les silanes de formule :

$$\begin{array}{l} \quad\quad\quad X_a \\ \quad\quad\quad | \\ RHNR'\ Si(OR'')_{3-a} \end{array}$$

dans laquelle :

- R représente un atome d'hydrogène, un radical alkyle ayant de 1 à 6 atomes de carbone inclusivement ou un radical hydrocarboné aliphatique relié à l'atome d'azote par une liaison carbone et contenant au moins un groupe amine primaire,
- R′ représente un radical hydrocarboné di-valent ayant de 1 à 6 atomes de carbone présentant éventuellement une fonction éther,
- R″ représente un groupe alkyle ou alcoxyalkyle ayant moins de 8 atomes de carbone et a est 0 ou 1,
- X est choisi parmi les radicaux vinyle, phényle et alkyle en $C_1$-$C_6$.

$C_1B$ : les aminoorganopolysiloxanes provenant de la réaction des silanes $C_1A$ sur des méthylpolysiloxanes hydroxylés (i) à raison de 0,4 à 1,2 équivalent-gramme de fonction $NF_2$ par équivalent-gramme de fonction hydroxyle.

$C_1C$ : les diorganopolysiloxanes présentant dans la chaîne des motifs $CH_3(R'NHR)SiO$, R′ et R ayant la signification donnée ci-dessus.

3. - Composition selon la revendication 1 ou 2, caractérisée en ce que $C_2$ est choisi parmi :

- $C_2A$ : les silanes de formule :

$$\begin{array}{l} \quad\quad X_a \\ \quad\quad | \\ A - Si(OR'')_{3-a} \end{array}$$

dans laquelle :

-X, R″ et a ont la même signification que ci-dessus pour $C_1A$.

A est un radical organique hydrocarboné porteur d'un groupe époxy ayant de 4 à 20 atomes de carbone.

$C_2B$ : les diorganopolysiloxanes bloqués par un radical époxy-fonctionnel provenant de la réaction des silanes $C_2A$ sur les mêmes organopolysiloxanes hydroxylés (i) linéaires ou ramifiés utilisés pour synthétiser les polymères $C_1B$ ci-dessus.

$C_2C$ : les diorganopolysiloxanes porteurs dans la chaîne de motif $ACH_3SiO$, A ayant la signification donnée ci-dessus.

4. - Composition selon l'une quelconque des revendications précédentes, caractérisée en ce que $C_1$ et $C_2$ sont dans un rapport, calculés en équivalent-gramme de fonction amine primaire de $C_1$ et en équivalent-gramme de fonction époxy de $C_2$, compris entre 1,05 à 3 inclus.

5. - Composition selon l'une quelconque des revendications précédentes, caractérisée en ce que le silane $C_1A$ est choisi parmi les silanes de formules :

$(CH_3O)_3Si(CH_2)_3NH(CH_2)_2NH_2$ ; $(CH_3OCH_2CH_2O)_3Si(CH_2)_2NH_2$ ;
$(C_2H_5O)_3Si(CH_2)_3NH_2$ ; $(CH_3OCH_2CH_2O)_3Si(CH_2)_3NH_2$ ;
$(C_2H_5O)_3Si(CH_2)_3O(CH_2)_3NH_2$ ; $(C_2H_5O)_2C_6H_5Si(CH_2)_3O(CH_2)_3NH_2$ ;
$(C_2H_5O)_3SiCH_2O(CH_2)_2NH_2$ ; $(C_2H_5O)_3Si(CH_2)_3O(CH_2)_2NH_2$ ;
$(C_2H_5O)_2CH_3Si(CH_2)_3NH_2$.

6. - Composition selon l'une quelconque des revendications précédentes, caractérisée en ce que le silane $C_2A$ est choisi parmi les silanes de formules :

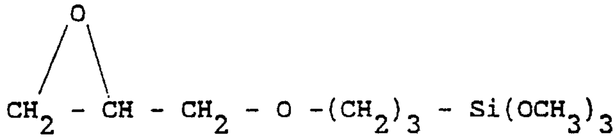

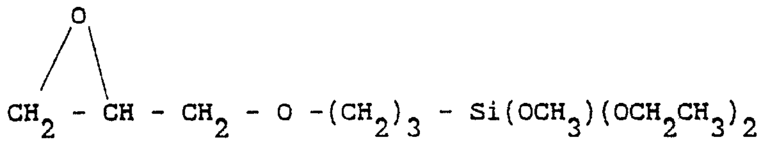

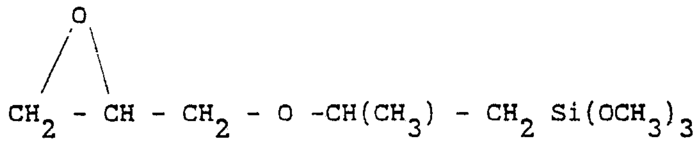

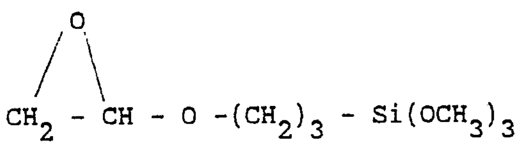

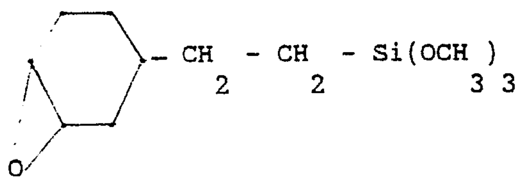

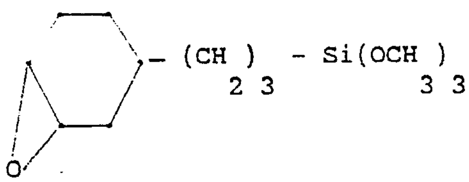

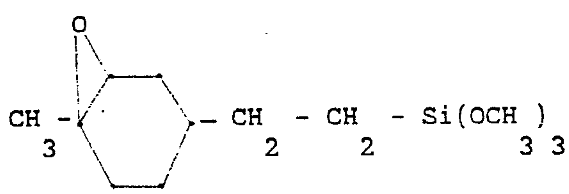

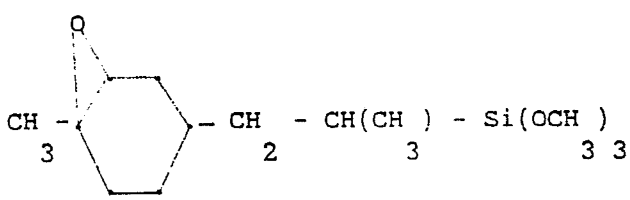

7. - Composition selon l'une quelconque des revendications 1 à 4, caractérisée en ce qu'on utilise le produit de réaction entre $C_1A$ et $C_2A$ répondant à la formule :

$(C_2H_5O)_3Si(CH_2)_3 - NH - CH_3 - \underset{\overset{|}{OH}}{CH} - CH_2 - O(CH_2)_3Si(OCH_3)_3$

$(CH_3O)_3Si(CH_2)_3 - NH - CH_2 - \underset{\overset{|}{OH}}{CH} - CH_2 - O(CH_2)_3Si(OCH_3)_3$

$(CH_3O)_3Si(CH_2)_3 - NH - (CH_2)_2 - NH - CH_2 - \underset{\overset{|}{OH}}{CH} - CH_2 - O(CH_2)_3Si(OCH_3)_3$

Office européen des brevets

# RAPPORT DE RECHERCHE EUROPEENNE

Numero de la demande

EP 89 42 0124

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 221 644 (DOW CORNING) * Revendication 1 * | 1 | C 08 K 5/54<br>C 08 L 83/04 |
| A,D | EP-A-0 178 751 (DOW CORNING) * Revendications 1,8 * | 1 | |
| A | GB-A-2 067 212 (TORAY) * Revendications 1,4; page 2, lignes 61-64; page 3, lignes 1-5,22-31 * | 1 | |
| A | EP-A-0 186 839 (TOSHIBA SILICONE) * Revendication 1 * | 1 | |
| A | EP-A-0 050 453 (TORAY) * Revendications 1,7; page 2, paragraphe 2 * | 1 | |
| Y | FR-A-2 603 893 (RHONE-POULENC) * Revendication 1 * | 1 | |
| Y | US-A-4 727 168 (M. YOSHINO) * Revendication 1; colonne 6, exemple 3 * | 1 | DOMAINES TECHNIQUES RECHERCHES (Int. Cl.4) |
| | | | C 08 K<br>C 08 L |

Le présent rapport a été établi pour toutes les revendications

| Lieu de la recherche | Date d'achèvement de la recherche | Examinateur |
|---|---|---|
| LA HAYE | 18-08-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)